# DEMANDE DE BREVET EUROPEEN

(11) **EP 2 514 687 A1**
(43) Date de publication de la demande: **24.10.2012**
(21) Numéro de dépôt: 12305393.6
(22) Date de dépôt: 02.04.2012
(51) Int. Cl.: B65D 81/26, A01J 25/00, B65D 85/76

(54) **Emballage pour fromage à pâte fraîche à égoutter**

(30) Priorité: 20.04.2011 FR 1153404
(71) Demandeur: Holding Durieux Pampagnin, 42600 Savigneux (FR)
(72) Inventeur: Durieux, Frédérick, 42400 SAINT-CHAMOND (FR); Durieux, Jérôme, 42480 LA FOUILLOUSE (FR)
(74) Mandataire: Thivillier, Patrick

(57) **Abrégé**

Cet emballage se présente sous forme d'un récipient plein (2) présentant des moyens formés dans le fond (2a) dudit récipient pour maintenir en appui une plaque rapportée (3) agencée pour recevoir le fromage tout en permettant l'égouttage dudit fromage dans un espace vide (4) formé entre ladite plaque (3) et le fond (2a) du récipient plein (2),des ergots (6) sont agencés sur la paroi intérieure dudit récipient plein (2), à une distance déterminée du fond (2a), pour permettre d'encliqueter ladite plaque rapportée (3) dans le récipient plein (2).

## Description

### DOMAINE TECHNIQUE DE L'INVENTION

La présente invention se rattache au secteur technique des récipients pour produits alimentaires, notamment de fromages à pâte fraîche, devant être égouttés, et concerne plus particulièrement un emballage pour fromage à pâte fraiche.

### DESCRIPTION DE L'ART ANTERIEUR

Actuellement, les fromages à pâte fraîche à égoutter, sont disposés en vue d'êtres consommés, dans une faisselle, elle-même introduite dans un récipient plein. La faisselle permet l'égouttage du fromage dont la partie liquide restante ou « petit lait » est récupérée dans le fond du récipient plein.

Lors de la dégustation d'un fromage à pâte fraîche ainsi conditionné, deux méthodes sont envisageables. La première consiste à manger directement le fromage à pâte fraîche dans la faisselle et de ce fait dans le récipient plein. Cette méthode ne permet pas de réellement séparer le liquide du fromage. La deuxième méthode consiste à retirer la faisselle contenant le fromage et de verser celui-ci dans une assiette ou un autre récipient. Cette méthode permet de séparer le liquide du fromage, mais nécessite l'utilisation d'un deuxième récipient et nécessite de retirer ladite faisselle du récipient plein.

D'après ce qui précède, les récipients pleins destinés à recevoir une faisselle comprenant un fromage à pâte fraîche, ne donnent pas entière satisfaction au consommateur.

### DESCRIPTION DE L'INVENTION

Le problème que tente de résoudre la présente invention est de réaliser un emballage pour fromage à pâte fraîche tel que fromage blanc, qui permette à l'utilisateur de manger directement le fromage à pâte fraiche, séparé de son liquide, dans l'emballage, sans avoir à utiliser une assiette ou bien un autre récipient et sans nécessiter de sortir ledit fromage à pâte fraiche de son récipient. L'emballage permet également de récupérer le liquide du fromage à pâte fraiche, après dégustation.

L'objectif de la présente invention est ainsi de fournir un emballage pour fromage à pâte fraiche qui pallie les inconvénients cités ci-dessus tout en étant simple, de réalisation peu complexe et présentant une utilisation avantageuse par rapport aux solutions de l'art antérieur.

Pour résoudre les problèmes précités, il a été mis au point un emballage pour fromage à pâte fraiche à égoutter qui se présente sous forme d'un récipient plein agencé pour recevoir une plaque rapportée. Ladite plaque rapportée est agencée pour faire office de fond tout en permettant l'égouttage dudit fromage à pâte fraiche dans un espace vide formé entre cette plaque et le fond du récipient plein.

De cette manière, le fromage disposé dans un tel emballage repose sur la plaque rapportée tandis que son liquide résultant de l'opération d'égouttage, est stocké dans l'espace qui subsiste entre le fond du récipient plein et ladite plaque. L'utilisateur peut donc de cette manière, manger le fromage à pâte fraiche, séparé de son liquide, directement dans l'emballage sans nécessiter de le retirer dudit emballage ou bien d'utiliser un autre récipient quelconque.

De préférence, dans l'emballage selon l'invention, la plaque rapportée est perforée ou comprend des évidements en périphérie pour permettre un égouttage optimal du fromage à pâte fraiche.

Selon un premier mode de réalisation particulier de l'invention, le récipient plein comprend une forme évasée, de section dégressive en direction de son fond c'est-à-dire que le diamètre du fond est inférieur au diamètre de son ouverture, de manière à permettre un blocage forcé de la plaque à une distance déterminée du fond permettant de créer ledit espace vide recevant le liquide du fromage à pâte fraiche.

Avantageusement, la plaque rapportée comprend un rebord de forme similaire au récipient plein pour ainsi permettre le blocage et le centrage de celle-ci à une distance déterminée du fond du récipient plein.

Selon un deuxième mode de réalisation, des moyens permettant de maintenir ladite plaque rapportée à une distance déterminée dudit fond, sont disposés au fond du récipient plein.

Avantageusement, des ergots sont formés sur la paroi intérieure dudit récipient plein, à une distance déterminée du fond, pour permettre d'encliqueter ladite plaque rapportée dans le récipient plein.

L'invention sera bien comprise, et d'autres caractéristiques et avantages de celle-ci apparaîtront, en référence aux dessins schématiques annexés, représentant, à titre d'exemple non limitatif, une forme de réalisation préférée.

### BREVE DESCRIPTION DES FIGURES

La figure 1 est une vue schématique représentant l'emballage pour fromage à pâte fraiche conforme à l'invention vue en coupe avant introduction de la plaque rapportée.
La figure 2 est une vue schématique représentant l'emballage pour fromage à pâte fraiche conforme à l'invention vue en coupe et comprenant un fromage à pâte fraiche.
La figure 3 est une vue schématique représentant l'emballage pour fromage à pâte fraiche conforme à l'invention vue de dessus.

Par simplification, les parties ou éléments d'une forme de réalisation qui se retrouvent de manière identique ou similaire dans une autre forme de réalisation seront identifiés par les mêmes références numériques et ne seront pas à nouveau décrits.

### DESCRIPTION DETAILLEE D'UN MODE DE REALISATION PREFERE

### DE L'INVENTION

Dans la suite de la description, le fromage à pâte fraiche devant être égoutté est désigné par l'appellation usuelle fromage blanc.

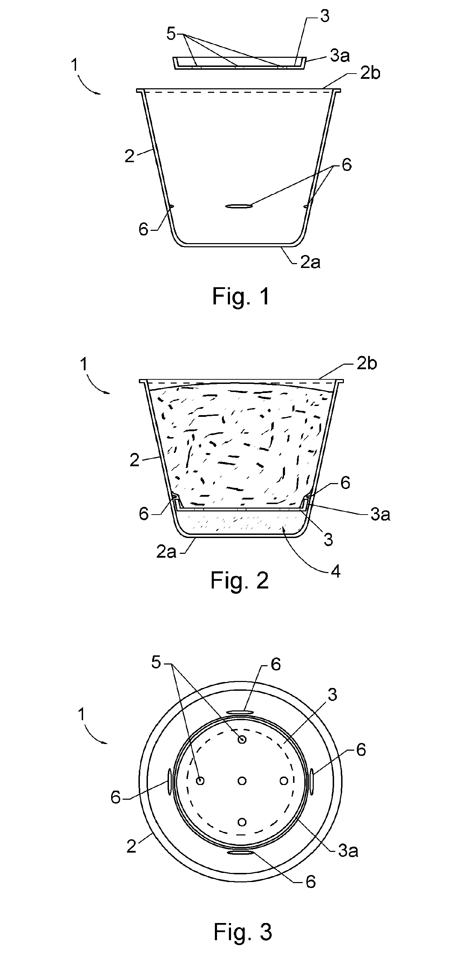

En référence aux figures 1 et 2, l'emballage (1) pour fromage blanc à égoutter se présente sous forme d'un récipient plein (2) recevant une plaque rapportée (3).

Le récipient (2) possède une forme évasée, de sorte que le diamètre du fond (2a) est plus petit que le diamètre de l'ouverture (2b). Cela entraine un blocage forcé de la plaque (3), à une distance déterminée du fond (2a) du récipient (2) laissant de cette manière subsister un espace (4) pour recevoir le liquide du fromage blanc. Bien évidement le diamètre de la plaque (3) est supérieur à celui du fond (2a) et inférieur à celui de l'ouverture (2b), pour assurer cet effet de blocage.

La plaque (3) est, dans un mode de réalisation préféré, perforée d'une pluralité de trous (5) pour laisser passer le liquide du fromage blanc et égoutter celui-ci de façon optimale. Ou bien la plaque (3) peut présenter périphériquement des évidements pour laisser passer le liquide. La plaque (3) comprend sur sa périphérie un rebord (3a) de forme similaire au récipient (2), c'est-à-dire sensiblement évasée, pour faciliter le blocage et le centrage de ladite plaque (3) au fond du récipient (2). La plaque peut également être maintenue en appui sur des moyens formés dans le fond du récipient.

Dans une autre forme de réalisation, des ergots (6) sont agencés sur la paroi intérieure du récipient (2), à une distance déterminée du fond (2a) de manière à permettre d'encliqueter la plaque (3) dans ledit récipient (2).

Lors de l'emballage, le fromage blanc est déposé dans le récipient (2), sur la plaque rapportée (3). Le fromage blanc s'égoutte et le liquide résultant de cet égouttage est reçu dans l'espace (4) formé entre la plaque (3) et le fond (2a) du récipient (2). L'utilisateur peut ainsi manger le fromage blanc séparé de son liquide, sans nécessiter de retirer ledit fromage blanc ou d'utiliser un autre récipient. Après dégustation, le liquide est récupérable pour toute autre utilisation.

Comme cela apparaît de ce qui précède, l'invention fournit un emballage (1) pour fromage blanc, présentant une utilisation simplifiée. En effet, l'utilisateur peut manger le fromage blanc séparé de son liquide et ne nécessite pas de retirer ledit fromage blanc pour le mettre dans une assiette ou bien un autre récipient. L'utilisateur a tout de même la possibilité de récupérer le liquide du fromage blanc après dégustation. L'invention fournit en particulier un emballage (1), simple, peu complexe à la réalisation, et donnant entière satisfaction à son utilisateur.

Il va de soi que l'invention n'est pas limitée à la forme de réalisation décrite ci-dessus à titre d'exemple mais qu'elle s'étend à toutes les formes de réalisations couvertes par les revendications ci-annexées.

Le récipient (2) et la plaque (3) peuvent être de section transversale circulaire (figures des dessins) ou autre.

## Revendications

1. Emballage (1) pour fromage à pâte fraiche à égoutter, **caractérisé en ce qu'**il se présente sous forme d'un récipient plein (2) présentant des moyens formés dans le fond (2a) dudit récipient pour maintenir en appui une plaque rapportée (3) agencée pour recevoir le fromage tout en permettant l'égouttage dudit fromage dans un espace vide (4) formé entre ladite plaque (3) et le fond (2a) du récipient plein (2),des ergots (6) sont agencés sur la paroi intérieure dudit récipient plein (2), à une distance déterminée du fond (2a), pour permettre d'encliqueter ladite plaque rapportée (3) dans le récipient plein (2).

2. Emballage (1) selon la revendication 1, **caractérisé en ce que** la plaque rapportée (3) est perforée de trous (5) pour permettre l'égouttage du fromage.

3. Emballage (1) selon la revendication 1, **caractérisé en ce que** la plaque rapportée (3) comprend des évidements en périphérie pour permettre l'égouttage du fromage.

4. Emballage (1) selon les revendications 1 à 3, **caractérisé en ce que** le récipient plein (2) comprend une forme évasée, telle que le diamètre du fond (2a) est inférieur au diamètre de son ouverture (2b), de manière à permettre un blocage forcé de la plaque (3) à une distance déterminée du fond (2a) permettant de créer ledit espace vide (4) recevant le liquide du fromage.

5. Emballage (1) selon les revendications 1 à 4, **caractérisé en ce que** la plaque rapportée (3) comprend un rebord (3a) de forme similaire à celle du récipient plein (2) pour ainsi permettre le blocage et le centrage de celle-ci à une distance déterminée du fond (2a) du récipient plein (2).

6. Emballage (1) selon les revendications 1 à 5, **caractérisé en ce que** des moyens permettant de maintenir ladite plaque rapportée (3), à une distance déterminée dudit fond (2a), sont disposés au fond du récipient plein (2).
